# EUROPEAN PATENT SPECIFICATION

(11) **EP 3 754 164 B1**
(45) Date of publication and mention of the grant of the patent: **09.02.2022**
(21) Application number: 19180756.9
(22) Date of filing: 18.06.2019
(51) Int. Cl.: F01N 3/20, F01N 3/021, F01N 13/00, F02D 13/02, F02B 25/02

(54) **INTERNAL COMBUSTION ENGINE AND METHOD FOR REDUCING PARTICULATE MATTER EMISSIONS**
VERBRENNUNGSMOTOR UND VERFAHREN ZUR REDUKTION VON FEINSTAUBEMISSIONEN
MOTEUR À COMBUSTION INTERNE ET PROCÉDÉ DE RÉDUCTION D'ÉMISSIONS DE MATIÈRES PARTICULAIRES

(43) Date of publication of application: 23.12.2020
(73) Proprietor: Winterthur Gas & Diesel Ltd., 8401 Winterthur (CH)
(72) Inventor: Lehner, Adrian, 8560 Märstetten (CH)
(74) Representative: Hepp Wenger Ryffel AG

(56) References cited:
- WO-A1-2012/051273
- WO-A1-2019/022708

## Description

The present invention relates to an internal combustion engine and a method for reducing particulate matter emissions according to the preamble of the independent claims.

The invention relates to the technical field of combustion engines and the reduction of their emissions.

For large ships the emissions requirements have been increasing, in particular with regard to nitrogen oxide emissions. For particulate matter more stringent regulations are expected to be introduced. Thus, there is a need to reliably reduce the amount of particulate matter in the exhaust gas emitted by the internal combustion engines of these ships.

Current technology for particulate matter abatement is limited by the temperature range required for oxidation reactions during thermal regeneration of particulate abatement devices such as filters. For lower temperatures of the exhaust gas, and thus typically for lower loads, the thermal regeneration of particulate matter abatement devices is reduced and insufficient.

When the device for reducing particulate matter is not thermally regenerated or only thermally regenerated in a limited way, the performance of the device for reducing particulate matter will decrease and maintenance measures are necessary at shorter intervals.

The regeneration of particulate matter abatement devices typically is based on oxidation of carbon based soot particles. WO2012/051273 A1 discloses an internal combustion engine, wherein exhaust flows through plural exhaust legs of an exhaust aftertreatment system. Each leg comprises an SCR reactor. During high load operation the flow through the system will be relatively equally split between the legs.

WO2019/022708 A1 discloses an exhaust after-treatment system including a first set and a second set of exhaust after-treatment components. Exhaust gas may be guided only through the second set of exhaust after-treatment components or through both of the first and the second set of exhaust after-treatment components. The problem of the invention is to prevent the drawbacks of the prior art and, in particular, to reliably reduce particle emissions in the exhaust gas of an internal combustion engine, also at low engine loads. A further, particular problem of the invention is to provide a flexible and efficient reduction of particle emissions for different engine loads.

According to a first aspect of the invention an internal combustion engine according to claim 1 is provided. The internal combustion engine is preferably a two-stroke engine. The engine is in particular suitable for a propulsion system, for example a propulsion system of a ship. The internal combustion engine comprises at least two cylinders. Each of the two cylinders comprises a combustion chamber and has an inlet for a fuel and an outlet for an exhaust gas with an outlet valve. The engine comprises at least one separation device downstream of the combustion chambers. A first and second exhaust line are connected to the at least one separation device. The at least one separation device is configured to separate the exhaust gas from each combustion chamber into a first gas stream for the first component exhaust line and a second gas stream for the second component exhaust line. A device for reducing particulate matter is arranged in the first component exhaust line downstream of the separation device. The second component exhaust line and the first component exhaust line are separate from each other at least until the device for reducing particulate matter.

The device for reducing particulate matter may comprise a filter such as deep-bed or wall-flow filter and a device for oxidation of unburnt hydrocarbons and other volatile carbon compounds.

Additionally a first selective catalytic reduction (SCR) reactor may be arranged in the first component exhaust line downstream of the separation device, in particular downstream of the device for reducing particulate matter. Preferably a device for injecting a reducing agent, such as a urea solution, is arranged upstream the first SCR reactor.

The first SCR reactor preferably has a maximum capacity of 80% or less of a full load outflow rate of the at least two cylinders. Preferably, the first SCR reactor has a maximum capacity of 60% or 50% or less of a full load outflow rate of the at least two cylinders. Full load may be the operating condition of the internal combustion engine at which the internal combustion engine provides a maximal power or torque. If a reduction of an energy supply results in a lower power or torque, this operating condition is called partial load. Full load may be the CMCR (contract maximum continuous rating) point of the engine. In one example, the full load (e.g. CMCR) is calculated by using a desired vessel speed, a desired power and optionally a desired propeller speed.

The separation device is configured to separate the exhaust gas into two streams. Since only a part of the exhaust gas is directed to the first SCR reactor, a smaller SCR reactor may be chosen. Large SCR reactors dispose significant restrictions on the construction of engines. Large SCRs are expensive, difficult to integrate in the engine, and result in a loss of fuel efficiency. Since only a part of the exhaust gases are guided through the SCR, space and cost may be saved.

In two-stroke engines charge air is compressed, a fuel is injected and the mixture is combusted in the cylinder. The gas mixture resulting from the combustion in the cylinder is called "combustion gas" in the following. The combustion gas may also comprise particulate matter.

Scavenge air is used to eject the combustion gas from the combustion chamber through the outlet. The combination of scavenge air and combustion gas is ejected through the outlet of the cylinder and collectively called "exhaust gas".

Due to the scavenging the hot combustion gas from the cylinder is pushed through the outlet with the colder scavenging air. During the scavenging the scavenge air and the combustion gas mix. Nevertheless, the exhaust gas has a temperature gradient over time because during the discharge phase a concentration of the combustion gas is initially higher and drops over time.

In other words, the gas guided through the outlet can be separated in a first part of the exhaust gas being relatively hot (i.e. mostly combustion gas) and a second part of the exhaust gas (i.e. mostly scavenging air), which is relatively cold. The first part of the exhaust gas includes a major part of the particulate matter emission and the nitrogen oxides.

The engine may comprise a turbocharger. The turbocharger may be arranged in the first and/or second component exhaust line. The turbocharger may be arranged downstream of the device for reduction of particulate matter. The turbocharger may be arranged downstream of the first and/or second SCR. In an alternative example, the turbocharger may be arranged upstream of the second SCR.

The separation device could also be formed by one or two or more valves arranged before the exhaust gas receiver. Preferably, the separation device comprises at least one, in particular two, valves per combustions chamber. The valve(s) may be butterfly valve(s) or poppet valve(s) or any other suitable valve(s). The separation device can also be arranged after the exhaust gas receiver but before the turbocharger or after the turbocharger. The separation device can be formed by multiple valves.

In one embodiment, the separation device comprises a controllable valve for opening and closing the first component exhaust line for separating the exhaust gas into the first and second component exhaust stream. The controllable valve may be controlled by a controller. The controller may be mechanical, i.e. a camshaft of the engine, or electronical.

The separation device is configured to separate the exhaust gas from the combustion chambers into a first and a second gas stream, respectively, for the first and second component exhaust line, wherein the gas streams are discharged sequentially.

The different embodiments of a separation device provide a simple and reliable separation of the first and second exhaust gas stream.

The separation device allows separating a part of the exhaust gas discharged first with, relatively more combustion gas and thus a higher temperature from a part discharged later with, relatively, more scavenging air and a lower temperature.

In one example, the controllable valve is first opened during a discharge phase of the combustion chamber and then later closed, when the scavenging air flows through the outlet. One example of such a separation device is shown in the European patent application EP 2 151 569 A1.

The separation device is configured to separate the exhaust gas from the combustion chamber into a first relatively hot gas stream and a second relatively cold gas stream. Preferably the relatively hot gas stream is for the first component exhaust line. Preferably, the relatively cold gas stream is for the second component exhaust line.

In other words the separation device is configured to separate the exhaust gas from the combustion chamber into a first gas stream, preferably for the first component exhaust line and a second gas stream, preferably for the second component exhaust line, wherein the temperature of the second gas stream is lower than the temperature of the first gas stream.

The separation device may separate the first gas stream by timing an opening and closing of the valves for the first component and second component exhaust lines. In one embodiment, the separation device is configured to guide a first part, which is expelled first from the outlet through the first component exhaust line and a second part which is expelled thereafter through the second component exhaust line.

The separation device may be configured for setting the valves allowing a flow into the first component exhaust line and the second component exhaust line, dependent on the temperature of the exhaust gas leaving the cylinders, dependent on the crank angle, dependent on a time, or dependent on a pressure in the cylinders.

Typically, during a first phase of exhaust gas discharge the temperature of the exhaust gas quickly rises to a maximum and then slowly decreases, as does the pressure in the cylinder.

During a second phase, starting from a specific point of time tₛ or a specific crank angle αₛ, when the scavenging air has entered the cylinder, the pressure in the cylinder is below a specific pressure pₛ and the temperature of the discharged exhaust gas has a temperature which is below a specific temperature Tₛ. The temperature of the exhaust gas for example may drop below 350°C, in particular below 250°C during that second phase.

The combustion engine may comprise a sensor for detecting a value that allows conclusions to be drawn about the temperature of the exhaust gas in the cylinders, such as a temperature sensor, a pressure sensor, a time sensor or a crank angle sensor. The sensor preferably is a fast reacting, high speed and/or fast measuring sensor, such that the measured values and changes of the measured values are detected sufficiently fast during the combustion cycle. A fast measurement allows an ongoing comparison with a predetermined critical value and/or a timely change of the setting of the separation device.

The value may be compared with a predetermined specific value. If the specific value is reached, the separation device may be brought into a new condition, for example from a first condition wherein exhaust gas is guided into the first component exhaust line and not into the second component exhaust line to a second condition wherein exhaust gas is guided into the second component exhaust line and not into the first component exhaust line.

The combustion engine may comprise a control unit for operating the separation device, in particular for setting the valves, in particular depending on a measurement of the sensor and/or on the temperature and/or a value that allows conclusions to be drawn about the temperature of the exhaust gas, such as the pressure, the time or the crank angle. As soon as a specific value, for example a specific temperature Tₛ, a specific pressure pₛ, a specific point of time tₛ or a specific crank angle αₛ is reached, the control unit may change the setting of the separation device.

The specific values are predetermined and may be provided to or may be stored in the control unit.

The specific values may depend on the load. A map with load dependent specific values may be deposited to be used by the control unit.

The control unit may be adapted for acquiring measurement values.

The control unit may be adapted for receiving and/or reading and/or storing of predetermined values.

The control unit may be adapted for comparing acquired values with a predetermined value.

The control unit for setting the separation device, in particular the valves, may be configured to operate the separation device depending on the load. For a predetermined load range, the control unit may set the separation device as described above.

Thus, only exhaust gas with a temperature above a certain critical value enters the device for reducing particulate matter.

The first and hot part of the exhaust gas has a relatively high concentration of particulate matter, whereas the second and cooler part is relatively clean.

The higher overall temperature of the exhaust gas flowing through the device for reducing particulate matter increases the potential for the oxidation of unburnt components of the particulates. This is especially advantageous for low engine loads where the temperature of at least a part of the exhaust gas is too low for oxidation reactions of particulate matter.

Typically at higher loads, when the average temperature of the exhaust gas is relatively high, more exhaust gas may be guided through the first component exhaust line than at lower loads.

Additionally or alternatively there may be predetermined load ranges for which either only a first gas stream for the first component exhaust line or only a second gas stream for the second component exhaust line or a first and a second gas stream for the first and second component exhaust lines at the same time are allowed.

The engine may comprise an exhaust gas recirculation (EGR). The EGR may be connected to an inlet of the internal combustion chamber and an outlet of the internal combustion chamber.

In one embodiment, the engine comprises an exhaust gas receiver for collecting the exhaust gas of the cylinders. The separation device may be arranged upstream of the exhaust gas receiver. Thereby, the exhaust gas may be separated before the components (e.g. combustion gas and scavenge air) of the exhaust gas stream are homogenously mixed in the exhaust gas receiver.

The exhaust gas receiver may be arranged in the second component exhaust line.

The separation device may be arranged downstream of the exhaust gas receiver.

In one preferred embodiment, at least one, preferably each, separation device comprises multiple valves. The separation device may comprise two or four valves. In one embodiment two of four valves are used for diverting the first component exhaust stream into the second component exhaust line. The other two valves are used for diverting the second component exhaust gas stream into the second component exhaust line.

In a further preferred embodiment one of three or four or more valves is adapted to divert a first part of the exhaust gas into the first component exhaust stream. The other two or three or more valves are adapted to divert the exhaust gas into the second component exhaust line. Thereby, the first and second component exhaust streams may be generated particularly simply and efficiently.

In one embodiment, the separation devices are formed by the outlet valves of each of the at least two cylinders. In one example, each cylinder may comprise multiple outlet valves. A first outlet valve of each cylinder is adapted to open the first component exhaust line and the second outlet valve is adapted to open the second component exhaust line. In a further example, each cylinder comprises two valves for each component exhaust line. Still further, each outlet may comprise four outlet valves. In these preferred embodiments, the separation device is formed by the outlet valves, providing a compact device. Additionally or alternatively, the separation device may include one or two or four or more valves, e.g. butterfly valves downstream of the outlet or the outlet valves.

In one embodiment, the engine comprises a SCR reactor, which may be arranged in the second component exhaust line. The second component exhaust line may be arranged downstream of the exhaust gas receiver.

Preferably a device for injecting a reducing agent, such as a urea solution, is arranged upstream the SCR reactor.

A second SCR reactor that can be arranged in the second component exhaust line may have a greater maximum capacity than a first SCR reactor being arranged in the first component exhaust line.

In one embodiment, the second component exhaust line comprises an SCR pipe and a bypass pipe, preferably in parallel. The second SCR reactor may be arranged in the SCR pipe. The second component exhaust line comprises at least one, preferably two, valves for guiding the exhaust gas into the SCR reactor and/or the bypass pipe. Further, the engine may comprise a controller adapted to actuate the valves such that the exhaust gas is directed to the second SCR reactor or through the bypass pipe or through both.

The bypass pipe allows a fuel-efficient operation mode of the engine. Thus, depending on the desired operation mode, i.e. fuel-efficient or emission reduced at high/low loads, an operator can select through which pipes/component exhaust lines the exhaust gases are directed. Examples for operation modes are described with regard to the shown embodiments of the invention.

In one embodiment, the first component exhaust line comprises a heating element disposed upstream of the device for reducing particulate matter.

The device for reducing particulate matter itself may comprise or may be connected to a heating device to heat the exhaust gas to a sufficient temperature for thermal regeneration.

A sufficient temperature (minimum continuous operating temperature) for reducing particulate matter, especially for thermal regeneration may be 500 °C.

A further aspect of the invention relates to a method for reducing particulate matter emissions of an internal combustion engine. Preferably, the engine is a combustion engine as mentioned herein above. The method comprises the following steps:
- Burning a fuel in at least two cylinders having an internal combustion chamber with an inlet for a fuel and an outlet for an exhaust gas with an outlet valve;
- Discharging exhaust gas through the outlet;
- Separating the exhaust gas of all combustion chambers downstream of the combustion chambers into a first and a second exhaust gas stream with a separation device, wherein the first exhaust gas stream is transported by a first component exhaust line, and the second exhaust gas stream is transported by a second component exhaust line, and wherein both exhaust lines are connected to the at least one separation device;
- Guiding the first exhaust gas stream in the first component exhaust line to a device for reducing particulate matter;
- Guiding the second exhaust gas stream in the second component exhaust line, wherein the first and the second exhaust lines are kept separate at least until the device for reducing particulate matter;
- Reacting the first exhaust gas stream in the device for reducing particulate matter such that an amount of particulate matter in the first exhaust gas stream is reduced.

The first exhaust gas stream may be discharged during a first phase of the combustion cycle and the second exhaust gas stream may be discharged during a first phase of the combustion cycle. The first exhaust gas stream has a first temperature and the second exhaust gas stream has a second temperature, wherein the second temperature is lower than the first temperature.

The first exhaust gas stream preferably has a temperature which is sufficient for thermal regeneration of the device for reducing particulate matter.

Additionally a first SCR-reactor, preferably with a maximal capacity of 80% or less, preferably 60% or 50% or less, of a full load outflow rate of the at least two cylinders may be arranged in the first component exhaust line.

In a preferred embodiment of the method, the method additionally comprises the step of heating the first exhaust gas stream upstream of the device for reducing particulate matter.

A part discharged first from the internal combustion chambers is guided into the first component exhaust line and a part discharged thereafter is guided into the second component exhaust line. The part discharged first has a higher temperature than the part discharged later (second part). Thereby, a simple method of separating the exhaust gas into a relatively hot and relatively cold exhaust stream is provided.

The internal combustion engine may comprise a fresh air feed for guiding fresh air through a scavenge air receiver and through flushing holes, also called scavenge ports or inlet ports, into the cylinder. The fresh air may be used to flush out the combustion gas out of the cylinder at the end of the combustion cycle. During the combustion cycle there is a first phase, when mainly combustion gas is discharged and a second phase wherein a mixture of combustion gas and fresh scavenge air is discharged. The exhaust gas discharged during the first phase may be guided in the first component exhaust line as a first gas stream. The exhaust gas discharged during the second phase may be guided in the second component exhaust line as a second gas stream.

The first gas stream comprising mainly combustion gas usually has a temperature which is higher than the temperature of the exhaust gas mixture comprising combustion gas and fresh scavenge air, which is regularly discharged from the cylinder. Furthermore, the exhaust gas discharged during the first phase has a high concentration of particulate matter and a high NOₓ content. The second gas stream, as it comprises a mixture of combustion air and fresh air, usually has a lower concentration of particulate matter and NOₓ content than the first gas stream.

The percentage of combustion gas and/or the concentration of particulate matter in the second gas stream may be so low, that it is not necessary to guide the second gas stream through a device for reducing particulate matter.

The temperature of the exhaust gas may remain above a critical temperature during the total emittance period, such that nearly the complete exhaust gas or the complete exhaust gas is guided through the first component exhaust line to a device for reducing particulate matter. The exhaust gas may be guided through the device for reducing particulate matter during the total emittance period. In this case, the second exhaust gas stream may have a value of close to or equal zero liters per second. The first exhaust gas stream is relatively hot and the second exhaust gas stream is relatively cold. As mentioned herein, relatively hot is compared to the other exhaust gas stream. For example, a first exhaust gas stream that is relatively hot means that it is hotter than the second exhaust gas stream.

In a preferred example the method additionally includes the step of guiding the second exhaust gas stream partially or entirely through a bypass pipe without reacting the second component gas stream partially or entirely. In an example, the second exhaust gas stream and/or the first exhaust gas stream is directed to a turbocharger.

In one example, the first and/or second stream is guided parallel to the turbocharger.

The internal combustion engine is claimed in claim 1.

The internal combustion engine is preferably a two-stroke engine. The engine is in particular suitable for a propulsion system, for example a propulsion system of a ship. The internal combustion engine comprises at least two cylinders. Each of the two cylinders comprises a combustion chamber and has an inlet for a fuel and an outlet for an exhaust gas with an outlet valve. The engine comprises at least one separation device downstream of the combustion chambers. A first and second exhaust line are connected to the at least one separation device. The at least one separation device is configured to separate the exhaust gas from each combustion chamber into a first gas stream, for example for the first component exhaust line, and a second gas stream, for example for the second component exhaust line, wherein the temperature of the second gas stream is lower than the temperature of the first gas stream.

A first SCR reactor may be arranged in the first component exhaust line and/or a second SCR reactor may be arranged in the second component exhaust line.

The separation device may be configured to allow guiding hot exhaust gas into the first and/or the second component exhaust line, and thus through the first and/or the second SCR reactor. Guiding gas with a temperature of above 500°C provides for regeneration of the SCR catalyst.

Hence, the separation device allows for regeneration of a selected SCR reactor by choosing the respective first or second component exhaust line for the guiding the hot exhaust gas.

The separation device allows for regeneration of SCR reactors also for low load, when only the first part of the exhaust gas, mainly comprising combustion gas, has a sufficient temperature for regeneration.

Non-limiting examples of the invention are described, by way of example only, with respect to the accompanying drawings, in which:
- Figure 1:: shows a schematic drawing of a first example according to the present invention,
- Figure 2:: shows a schematic drawing of a second example according to the present invention,
- Figure 3:: shows a schematic drawing of a third example according to the present invention.

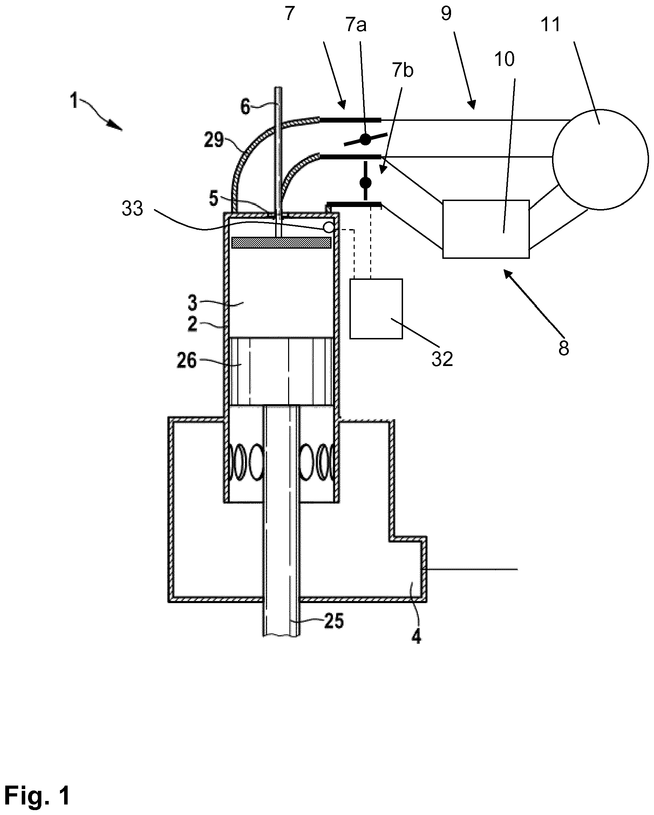

Figure 1 shows a schematic drawing of a first example according to the present invention. The internal combustion engine 1 comprises a cylinder 2 with a combustion chamber 3. Inside the combustion chamber 3, a piston 26 with a piston rod 25 is provided.

Fuel is guided through a fuel inlet (not shown) into the combustion chamber 3 and burned in the combustion chamber 3. The combustion gas is guided through an outlet 5 which comprises a single outlet valve 6. The combustion gas is scavenged with scavenge air. After the outlet valve 6 the combustion gas and the scavenge air (collectively exhaust gas) are guided through an outlet pipe 29.

The outlet pipe 29 comprises two channels. A first channel is used for directing a part of the exhaust gas through a device for reducing particulate matter 10. The second channel is used for guiding the rest of the exhaust gas to the exhaust gas receiver 11.

A separation device 7 is arranged in the outlet pipe 29. The separation device 7 comprises two valves 7a, 7b which open and close the two channels of the outlet pipe 29.

The combustion machine 1 comprises a control unit 32, such that the separation device 7 is configured to separate the exhaust gas from the combustion chamber 3 into a first gas stream for a first component exhaust line 8 and a subsequent second gas stream for the second component exhaust line 9, wherein the temperature of the second gas stream is lower than the temperature of the first gas stream.

The combustion machine 1 comprises a sensor 33 for detecting a value that allows conclusions to be drawn about the temperature of the exhaust gas, in this case a temperature sensor.

When the temperature of the exhaust gas drops below a predetermined value the control unit 32 provides for opening valve 7a and closing valve 7b as shown in the figure.

As long as the temperature of the exhaust gas is sufficiently high, the control unit 32 provides for keeping valve 7a closed and keeping valve 7b open, such that the exhaust gas stream is guided through the device for reducing particulate matter 10 and enables thermal regeneration.

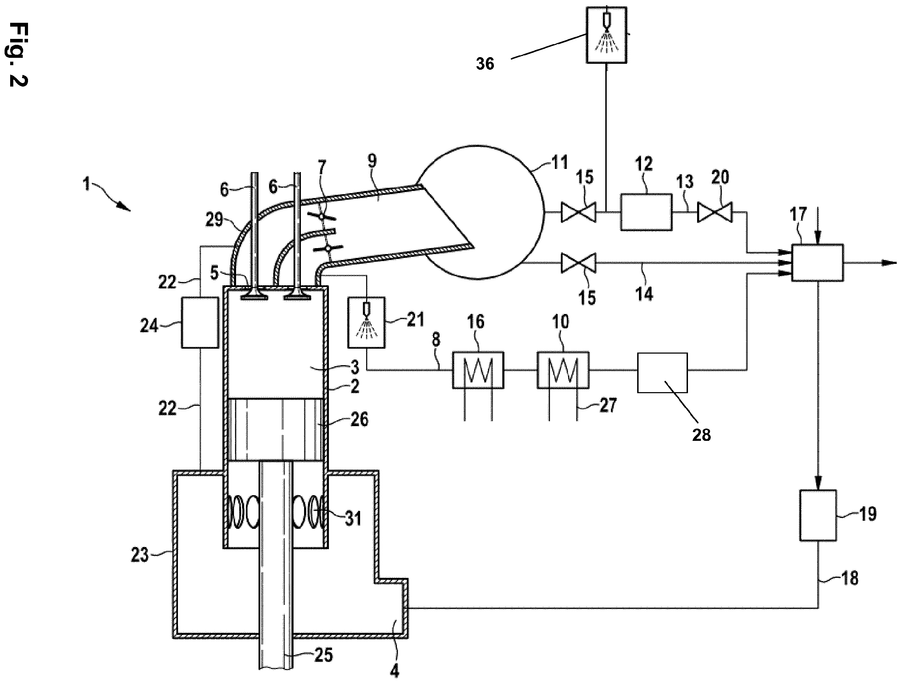

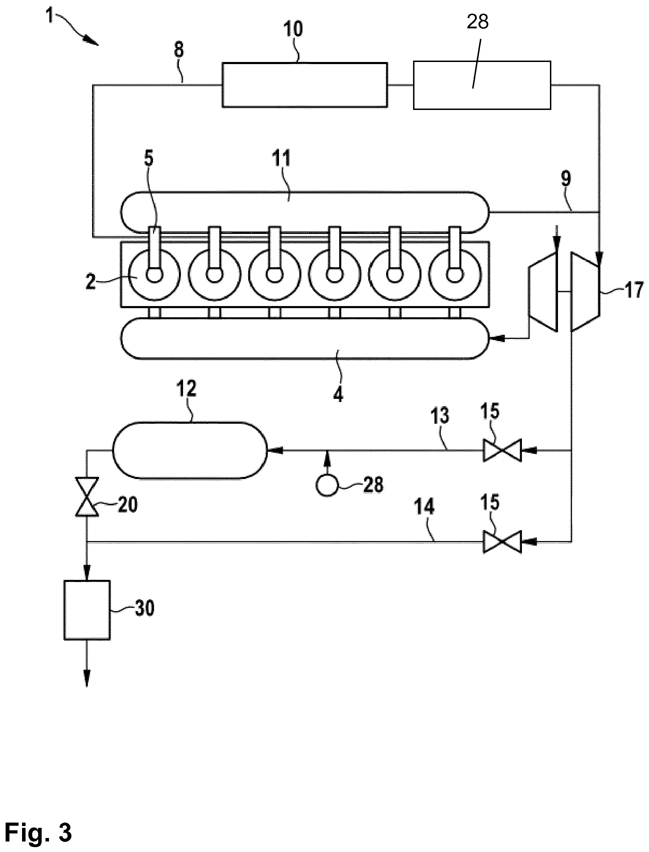

Figure 2 shows a schematic drawing of a first example of a two-stroke, cross-head internal combustion engine 1. The engine 1 comprises the parts of the engine of figure 3.

A first component exhaust line 8 is connected to the outlet pipe 29. The connected first component exhaust line 8 guides a part of the exhaust gas through the outlet 5 to a device for reducing particulate matter 10 and further to a first SCR reactor 28. The first SCR reactor 28 reduces nitrogen oxides in the exhaust gas with a selective catalytic reduction.

The reduction of nitrogen oxides is based on a reaction of the nitrogen oxides with ammonia. Ammonia is generated by injecting urea with a urea injector 21 upstream of the first SCR reactor 10. Only a part of the exhaust gas of the cylinder 2 is guided through the first component exhaust line 8. The exhaust gas expelled from the cylinder may have a temperature which is too low (such as below 400°C) for thermal regeneration of the device for reducing particulate matter 10. In order to allow thermal regeneration anyway, the line 8 may additionally comprise a heating element 16, which is disposed upstream of the device for reducing particulate matter 10 and the first SCR reactor 28 and may be disposed downstream of the urea injector 21.

In the two-stroke engine 1, scavenge air is used during the exhaust phase to discharge a combustion gas from the combustion chamber 3. Hence, the exhaust gas comprises scavenge air as well as combustion gas. The combustion gas has a higher temperature than the scavenge air due to the combustion. Further, a concentration of nitrogen oxides as well as a concentration of particulate matter is higher in the combustion gas than in the scavenge air.

If the combustion gas and the scavenge air are mixed, as for example, in an exhaust gas receiver 11, such as an exhaust gas manifold, the temperature of the combustion gas is reduced. At low loads, this temperature is particularly low, because a fuel injection is small, an amount of combustion gas is low and a particulate matter abatement device cannot be thermally regenerated.

Thus, the combustion gas may be separated from the scavenge air at the outlet 5 of the cylinder 2 at low loads. A first method of separating is opening a first valve of separation device 7 for the first component exhaust line 8 and closing a second valve of separation device 7 for the second component exhaust line 9. In this configuration, the exhaust gas is entirely guided through the first component exhaust line 8. At higher loads, both valves, for example butterfly valves, of separation device 7 are open and a majority of the exhaust gas is guided through the second component exhaust line 9.

Differing from the engine shown in figure 1, the engine shown in figure 2 comprises two outlet valves 6 for the combustion chamber 3. Even though two outlet valves are shown, preferably one or four valves are used. The outlet valves 6 are used to guide the exhaust gas. First, while combustion gas is expelled, the outlet valve for the first component exhaust line 8 is open while the outlet valve for the second component exhaust line 9 is closed. In this configuration, the exhaust gas is guided through the first component exhaust line 8. This may be supported by closing both butterfly valves of separation device 7. As soon as the scavenge air arrives at the outlet 5, the outlet valve 6 for the first component exhaust line 8 is closed and the outlet valve of the second component exhaust line 9 is opened.

Thereby, the separated part is guided through the first component exhaust line 8, which allows a reliable reduction of particulate matter in the device for device for reducing particulate matter and reduction of nitrogen oxides in the first SCR reactor 28. In addition, since only a part of the exhaust gas is guided through line 8, a small SCR reactor may be used. An SCR reactor 28 with a maximum capacity of 40% of a full load outflow rate is sufficient, which saves space. The device for reducing particulate matter 10 may comprise a reactor heater 27 to adjust the temperature in the reactor further.

The second component exhaust line 9 leads to the exhaust gas receiver 11. From the exhaust gas receiver 11, the exhaust gas is let through an SCR pipe 13 or a bypass pipe 14. The SCR pipe 13 and the bypass pipe 14 each comprise valves 15. The valves 15 can be opened and closed independently such that the bypass pipe 14 and/or the SCR pipe 13 are used. The SCR pipe 13 comprises a second SCR reactor 12. The second SCR reactor 12 is adapted for higher throughputs than the first SCR reactor 10. The second SCR reactor 12 has a maximum capacity of at least 60% of the full load outflow rate of the cylinders 2.

An urea injector 36 is arranged upstream of the second SCR reactor 12.

In one example, the second SCR reactor 12 and the first SCR reactor 28 may have a combined total capacity of at least 100% of the full load outflow rate of the at least two cylinders. The bypass pipe may not comprise an SCR.

In addition, the SCR pipe 13 comprises a second valve 20 downstream of the SCR reactor 12. The valve 20 prevents a backflow into the SCR pipe 13.

The first line 8 and the second line 9 (i.e. the bypass pipe 14 and the SCR pipe 13) lead to a turbocharger 17 and to a funnel 30 (see figure 3) thereafter. The turbocharger 17 draws fresh air with the energy stored in the exhaust gas. The fresh air drawn by the turbocharger 17 is guided through a cooler system 19 and a fresh air feeder 18 to the inlet 4. After the inlet 4, the fresh air is guided through a scavenge air receiver 23 and through flushing holes 31 into the cylinder 2.

Additionally to the nitrogen oxide reduction within the SCR reactors 28, 12, emissions such as particles and sulfuric acids are reduced with an EGR cleaner 24. An EGR pipe 22 is connected to the outlet 5 of the cylinder 2. The EGR pipe 22 leads exhaust gas to the EGR cleaner 24 and after the EGR cleaner 24 into the combustion chamber 3. The EGR cleaner 24 may comprise a scrubber, a cooler and a water mist catcher.

The engine 1 as shown in figure 1 allows three different operational modes:

A first operational mode is particularly suited for low loads. At low loads, the valves 15 and the separation device 7 are set such that the first component exhaust line 8 and the bypass pipe 14 are open. The SCR pipe 13 is closed. A first part of the exhaust gas which comprises combustion gas is guided through the device for reducing particulate matter 10 and the first SCR reactor 28, where nitrogen oxides are reduced. The rest of the exhaust gas, which mainly comprises scavenge air, is guided through the bypass pipe 14. In particular, SCR reactor 28 can also be bypassed by a separated bypass line (not shown).

In a second operational mode, the exhaust gas is guided through the second exhaust line 9 only and no exhaust gas is guided through the first exhaust line 8. In a variant of the second operational mode, the exhaust gas is only guided through the SCR pipe 13 and the second SCR reactor 12. The second operational mode corresponds to the SCR reactors in engine as known in the prior art.

In a third operational mode, the exhaust gas is guided through the bypass pipe 14 only and the first component exhaust line 8 as well as the SCR pipe 13 are closed. In this operational mode, the devices for reducing particulate matter 10 as well as the SCRs 28 and 12 are switched off. The third operational mode is particularly fuel efficient.

Figure 3 shows a third example of an internal combustion engine 1. The third example of the engine 1 is similar to the first example. As a result the reference signs refer to similar features. However, in contrast to the first example, the SCR pipe 13 with the second SCR reactor 12 and the bypass pipe 14 are arranged downstream of the turbocharger 17.

Engine 1 comprises cylinders 2. At the outlet of the cylinders 2, and exhaust gas from the cylinders 2 is separated into a first and a second stream. The first stream is guided through a first component exhaust line 8 and the second stream is guided through a second component exhaust line 9. The second component exhaust line 9 comprises the exhaust gas receiver 11. The first component exhaust line 8 is composed as shown with reference to figure 1, comprises the device for reducing particulate matter 10 and the first SCR reactor 28 and is parallel to the exhaust gas receiver 11. After the first SCR reactor 28 and before the second SCR reactor 12 and the bypass pipe 14, the first component exhaust line 8 merges into the second line 9 and the entire exhaust gas of all cylinders 2 is guided through the turbocharger 17.

After the turbocharger 17 the second component exhaust line 9 allows the exhaust gas to be directed into the second SCR reactor 12 through the SCR pipe 13 or through the bypass pipe 14. Thereafter, the exhaust gas may be released through a funnel 30. In a variation the second SCR reactor 12 and the bypass pipe 14 may be arranged upstream of the turbocharger 17.

The operational modes outlined above regarding figure 2 can also be used in the example shown in figure 3.

## Claims

1. Internal combustion engine, preferably a two-stroke engine (1), in particular for a propulsion system, comprising:
- at least two cylinders (2), each comprising a combustion chamber (3) having an inlet for a fuel and an outlet (5) for an exhaust gas with an outlet valve (6),
- wherein the engine comprises at least one separation device (7) downstream of the combustion chambers (3)
- wherein a first component exhaust line (8) and a second component exhaust line (9) are connected to the at least one separation device (7),
- wherein the at least one separation device (7) is configured to separate the exhaust gas from each combustion chamber (3) into a first gas stream for the first component exhaust line (8) and a second gas stream for the second component exhaust line (9), and
- wherein a device for reducing particulate matter (10) is arranged in the first component exhaust line (8) downstream of the separation device (7)
- the second component exhaust line and the first component exhaust lines (8,9) are separate from each other at least until the device for reducing particulate matter (10),
**characterized in that,** the separation device (7) is configured to separate the exhaust gas from the combustion chamber (3) into a first gas stream discharged during a first phase of a combustion cycle, preferably for the first component exhaust line (8), and a subsequent second gas stream discharged during a second phase of the combustion cycle, preferably for the second component exhaust line (9), wherein the temperature of the second gas stream is lower than the temperature of the first gas stream.

2. Internal combustion engine according to claim 1, **characterized in that**, the separation device (7) comprises a controllable valve, in particular a butterfly valve, for opening and closing the first component exhaust line for separating the exhaust gas into the first and second component exhaust stream.

3. Internal combustion engine according to one of the preceding claims, **characterized in that**, the engine comprises an exhaust gas receiver (11) for collecting the exhaust gas of the cylinders and wherein the at least one separation device (7) is arranged upstream of the exhaust gas receiver (11) .

4. Internal combustion engine to one of the preceding claims, **characterized in that**, the separation devices (7), are formed by the outlet valves of each of the at least two cylinders (2).

5. Internal combustion engine according to one of the preceding claims, **characterized in that**, at least one, preferably each, separation device (7) comprises multiple valves, preferably two or four valves, for the respective combustion chamber (3), for separating the exhaust gas into the first and second component exhaust stream.

6. Internal combustion engine according to one of the preceding claims, **characterized in that**, the combustion engine comprises a sensor for detecting a value that allows conclusions to be drawn about the temperature of the exhaust gas in the cylinders, such as a temperature sensor, a pressure sensor, a time sensor or a crank angle sensor.

7. Internal combustion engine according to one of the preceding claims, **characterized in that**, the engine (1) comprises at least one SCR-reactor (12), which is preferably arranged in the second component exhaust line (9), preferably downstream of the exhaust gas receiver (11).

8. Internal combustion engine according to one of the preceding claims, wherein the combustion machine comprises a control unit (32) for operating the separation device.

9. Internal combustion engine according to one of the preceding claims, **characterized in that**, the first component exhaust line (8) comprises a heating element (16) disposed upstream of the device for reducing particulate matter (10) .

10. Internal combustion engine according to one of the preceding claims, **characterized in that**, the second component exhaust line comprises an SCR pipe (13) and a bypass pipe (14), wherein an SCR-reactor (12) is arranged in the SCR pipe and wherein the second component exhaust line comprises at least one, preferably two, valves (15) for guiding the exhaust gas into the SCR-reactor (12) and/or the bypass pipe (14).

11. Internal combustion engine according to claim 10, wherein a device for injecting a reducing agent, such as a urea solution, is arranged upstream the SCR reactor (28, 12).

12. Method for reducing particulate emissions and thermal regeneration of a device for reducing particulate matter of an internal combustion engine, preferably a combustion engine according to any one of the claims 1 to 11, comprising the steps of:
- Burning a fuel in at least two cylinders (2) having an internal combustion chamber (3) with an inlet for a fuel and an outlet (5) for an exhaust gas with an outlet valve (6);
- Discharging exhaust gas through the outlet (5);
- Operating at least one separation device (7), wherein a first exhaust gas stream discharged during a first phase of a combustion cycle is transported by a first component exhaust line (8), and a second subsequent exhaust gas stream discharged during a second phase of the combustion cycle is transported by a second component exhaust line (9), and wherein both exhaust lines (8,9) are connected to the at least one separation device (7);
- Guiding the first exhaust gas stream in the first component exhaust line (8) to a device for reducing particulate matter (10);
- Guiding the second exhaust gas stream in the second component exhaust line (9), wherein the first and the second exhaust lines are kept separate at least until the device for reducing particulate matter (10), wherein the first exhaust gas stream has a first temperature and the second exhaust gas stream has a second temperature, wherein the second temperature is lower than the first temperature;
- Cleaning the first exhaust gas stream in the device for reducing particulate matter such that an amount of particulate matter is reduced.

13. Method according to claim 12, wherein in the separating step a part discharged first from the internal combustion chambers is guided into the first component exhaust line (8) and a part discharged thereafter is guided into the second component exhaust line (9).

14. Method according to one of the claims 12 to 13 additionally comprising the step of:
- Heating the first exhaust gas stream upstream of the device for reducing particulate matter (10) to thermally regenerate the device for reducing particulate matter (10).

15. Method according to one of the claims 12 to 14, additionally comprising the step of:
- Guiding the second exhaust gas component stream through the second component exhaust line (9), preferably to a SCR reactor (12);
- Preferably, reacting the second exhaust gas component stream in the SCR reactor (12).

16. Method according to one of the claims 12 to 15, wherein a reducing agent is injected upstream of the SCR reactor (12, 28) .

17. Method according to one of the claims 12 to 16, comprising the step of detecting a value that allows conclusions to be drawn about the temperature of the exhaust gas in the cylinders and preferably operating the separation device in dependence of the detected value.

## Patentansprüche

1. Verbrennungsmotor, vorzugsweise Zweitaktmotor (1), insbesondere für ein Antriebssystem, umfassend:
- mindestens zwei Zylinder (2), die jeweils einen Brennraum (3) mit einem Einlass für einen Kraftstoff und einen Auslass (5) für ein Abgas mit einem Auslassventil (6) aufweisen,
- wobei der Motor stromabwärts der Brennkammern (3) mindestens eine Abscheidevorrichtung (7) aufweist
- wobei an die mindestens eine Trenneinrichtung (7) eine erste Teilabgasleitung (8) und eine zweite Teilabgasleitung (9) angeschlossen sind,
- wobei die mindestens eine Trenneinrichtung (7) dazu ausgebildet ist, das Abgas aus jeder Brennkammer (3) in einen ersten Gasstrom für die erste Teilabgasleitung (8) und einen zweiten Gasstrom für die zweite Teilabgasleitung (9) zu trennen, und
- wobei in der ersten Teilabgasleitung (8) stromabwärts der Trenneinrichtung (7) eine Einrichtung zur Partikelminderung (10) angeordnet ist
- die zweite Teilabgasleitung und die erste Teilabgasleitung (8, 9) zumindest bis zur Einrichtung zur Partikelminderung (10) voneinander getrennt sind,
**dadurch gekennzeichnet, dass** die Trennvorrichtung (7) so konfiguriert ist, dass sie das Abgas aus der Verbrennungskammer (3) in einen ersten Gasstrom, der während einer ersten Phase eines Verbrennungszyklus abgegeben wird, vorzugsweise für die erste Teilabgasleitung (8), und einen anschließenden zweiten Gasstrom, der während einer zweiten Phase des Verbrennungszyklus abgegeben wird, vorzugsweise für die zweite Teilabgasleitung (9), trennt, wobei die Temperatur des zweiten Gasstroms niedriger ist als die Temperatur des ersten Gasstroms.

2. Verbrennungsmotor nach Anspruch 1, **dadurch gekennzeichnet, dass** die Trennvorrichtung (7) ein steuerbares Ventil, insbesondere eine Drosselklappe, zum Öffnen und Schließen der ersten Teilabgasleitung zum Trennen des Abgases in den ersten und zweiten Teilabgasstrom umfasst.

3. Verbrennungsmotor nach einem der vorhergehenden Ansprüche, **dadurch gekennzeichnet, dass** der Motor einen Abgassammler (11) zum Sammeln des Abgases der Zylinder aufweist und wobei die mindestens eine Trenneinrichtung (7) stromaufwärts des Abgassammlers (11) angeordnet ist.

4. Verbrennungsmotor nach einem der vorhergehenden Ansprüche, **dadurch gekennzeichnet, dass** die Trennvorrichtungen (7) durch die Auslassventile jedes der mindestens zwei Zylinder (2) gebildet sind.

5. Verbrennungsmotor nach einem der vorhergehenden Ansprüche, **dadurch gekennzeichnet, dass** mindestens eine, vorzugsweise jede, Trenneinrichtung (7) mehrere Ventile, vorzugsweise zwei oder vier Ventile, für den jeweiligen Brennraum (3) zur Trennung des Abgases in den ersten und zweiten Teilabgasstrom umfasst.

6. Verbrennungsmotor nach einem der vorhergehenden Ansprüche, **dadurch gekennzeichnet, dass** der Verbrennungsmotor einen Sensor zur Erfassung eines Wertes umfasst, der Rückschlüsse auf die Temperatur des Abgases in den Zylindern zulässt, wie einen Temperatursensor, einen Drucksensor, einen Zeitsensor oder einen Kurbelwinkelsensor.

7. Verbrennungsmotor nach einem der vorhergehenden Ansprüche, **dadurch gekennzeichnet, dass** der Motor (1) mindestens einen SCR-Reaktor (12) umfasst, der vorzugsweise in der zweiten Teilabgasleitung (9), vorzugsweise stromabwärts des Abgassammlers (11), angeordnet ist.

8. Verbrennungsmotor nach einem der vorhergehenden Ansprüche, wobei die Verbrennungsmaschine eine Steuereinheit (32) zum Betreiben der Abscheidevorrichtung aufweist.

9. Verbrennungsmotor nach einem der vorangehenden Ansprüche, **dadurch gekennzeichnet, dass** die erste Teilabgasleitung (8) ein stromaufwärts der Einrichtung zur Partikelminderung (10) angeordnetes Heizelement (16) aufweist.

10. Verbrennungsmotor nach einem der vorhergehenden Ansprüche, **dadurch gekennzeichnet, dass** die zweite Teilabgasleitung ein SCR-Rohr (13) und ein Bypass-Rohr (14) umfasst, wobei in dem SCR-Rohr ein SCR-Reaktor (12) angeordnet ist und wobei die zweite Teilabgasleitung mindestens ein, vorzugsweise zwei, Ventile (15) zur Führung des Abgases in den SCR-Reaktor (12) und/oder das Bypass-Rohr (14) umfasst.

11. Verbrennungsmotor nach Anspruch 10, wobei stromaufwärts des SCR-Reaktors (28, 12) eine Vorrichtung zum Einspritzen eines Reduktionsmittels, wie einer Harnstofflösung, angeordnet ist.

12. 12Verfahren zur Partikelminderung und thermischen Regeneration einer Einrichtung zur Partikelminderung eines Verbrennungsmotors, vorzugsweise eines Verbrennungsmotors nach einem der Ansprüche 1 bis 11, umfassend die Schritte:
- Verbrennen eines Kraftstoffs in mindestens zwei Zylindern (2) mit einem Brennraum (3) mit einem Einlass für einen Kraftstoff und einem Auslass (5) für ein Abgas mit einem Auslassventil (6);
- Ableiten von Abgas durch den Auslass (5);
- Betreiben mindestens einer Trenneinrichtung (7), wobei ein während einer ersten Phase eines Verbrennungszyklus abgeführter erster Abgasstrom durch eine erste Teilabgasleitung (8) und ein während einer zweiten Phase des Verbrennungszyklus abgeführter zweiter nachfolgender Abgasstrom durch eine zweite Teilabgasleitung (9) transportiert wird, und wobei beide Abgasleitungen (8, 9) an die mindestens eine Trenneinrichtung (7) angeschlossen sind;
- Leiten des ersten Abgasstroms in der ersten Teilabgasleitung (8) zu einer Einrichtung zur Partikelminderung (10);
- Führen des zweiten Abgasstroms in der zweiten Teilabgasleitung (9), wobei die erste und die zweite Teilabgasleitung mindestens bis zur Einrichtung zur Partikelminderung (10) getrennt gehalten werden, wobei der erste Abgasstrom eine erste Temperatur und der zweite Abgasstrom eine zweite Temperatur aufweist, wobei die zweite Temperatur niedriger ist als die erste Temperatur;
- Reinigen des ersten Abgasstroms in der Einrichtung zur Partikelminderung, so dass eine Menge an Partikeln reduziert wird.

13. Verfahren nach Anspruch 12, wobei in dem Trennschritt ein zuerst aus den Brennkammern abgeführter Teil in die erste Teilabgasleitung (8) und ein danach abgeführter Teil in die zweite Teilabgasleitung (9) geleitet wird.

14. Verfahren nach einem der Ansprüche 12 bis 13, zusätzlich umfassend den Schritt:
- Aufheizen des ersten Abgasstroms vor der Einrichtung zur Partikelminderung (10) zur thermischen Regeneration der Einrichtung zur Partikelminderung (10).

15. Verfahren nach einem der Ansprüche 12 bis 14, zusätzlich umfassend den Schritt:
- Leiten des zweiten Abgaskomponentenstroms durch die zweite Teilabgasleitung (9), vorzugsweise zu einem SCR-Reaktor (12) ;
- Umsetzen des zweiten Abgaskomponentenstroms vorzugsweise im SCR-Reaktor (12).

16. Verfahren nach einem der Ansprüche 12 bis 15, wobei stromaufwärts des SCR-Reaktors (12, 28) ein Reduktionsmittel eingedüst wird.

17. Verfahren nach einem der Ansprüche 12 bis 16, umfassend den Schritt des Erfassens eines Wertes, der Rückschlüsse auf die Temperatur des Abgases in den Zylindern zulässt, und vorzugsweise des Betreibens der Abscheidevorrichtung in Abhängigkeit von dem erfassten Wert.

## Revendications

1. Moteur à combustion interne, de préférence un moteur à deux temps (1), notamment pour un système de propulsion, comprenant :
- au moins deux cylindres (2), comprenant chacun une chambre de combustion (3) ayant une entrée pour un carburant et une sortie (5) pour un gaz d'échappement avec une soupape d'échappement (6),
- dans lequel le moteur comprend au moins un dispositif de séparation (7) en aval des chambres de combustion (3),
- dans lequel une ligne d'échappement de premier composant (8) et une ligne d'échappement de second composant (9) sont connectées à au moins un dispositif de séparation (7),
- dans lequel au moins un dispositif de séparation (7) est configuré pour séparer les gaz d'échappement de chaque chambre de combustion (3) en un premier flux de gaz pour la ligne d'échappement de premier composant (8) et un second flux de gaz pour la ligne d'échappement de second composant (9), et
- dans lequel un dispositif de réduction des matières particulaires (10) est disposé dans la ligne d'échappement de premier composant (8) en aval du dispositif de séparation (7) .
- la ligne d'échappement de second composant et la ligne d'échappement de premier composant (8, 9) sont séparées l'une de l'autre au moins jusqu'au dispositif de réduction de la matière particulaire (10), **caractérisé en ce que**, le dispositif de séparation (7) est configuré pour séparer les gaz d'échappement de la chambre de combustion (3) en un premier flux de gaz déchargé pendant une première phase d'un cycle de combustion, de préférence pour la ligne d'échappement de premier composant (8), et un second flux de gaz subséquent déchargé pendant une seconde phase du cycle de combustion, de préférence pour la ligne d'échappement de second composant (9), dans lequel la température du second flux de gaz est inférieure à la température du premier flux de gaz.

2. Moteur à combustion interne selon la revendication 1, **caractérisé en ce que**, le dispositif de séparation (7) comprend une vanne contrôlable, en particulier une vanne papillon, pour ouvrir et fermer la ligne d'échappement de premier composant pour séparer les gaz d'échappement en premier et second flux d'échappement de composants.

3. Moteur à combustion interne selon l'une des revendications précédentes, **caractérisé en ce que**, le moteur comprend un récepteur de gaz d'échappement (11) pour collecter les gaz d'échappement des cylindres et dans lequel le au moins un dispositif de séparation (7) est disposé en amont du récepteur de gaz d'échappement (11).

4. Moteur à combustion interne selon l'une des revendications précédentes, **caractérisé en ce que**, les dispositifs de séparation (7), sont formés par les soupapes d'échappement de chacun des au moins deux cylindres (2).

5. Moteur à combustion interne selon l'une des revendications précédentes, **caractérisé en ce qu'**au moins un, de préférence chaque, dispositif de séparation (7) comprend plusieurs soupapes, de préférence deux ou quatre soupapes, pour leur chambre de combustion (3) respective, pour séparer les gaz d'échappement en flux d'échappement de premier et de second composant.

6. Moteur à combustion interne selon l'une des revendications précédentes, **caractérisé en ce que** le moteur à combustion comprend un capteur pour détecter une valeur qui permet de conclure sur la température des gaz d'échappement dans les cylindres, tel qu'un capteur de température, un capteur de pression, un capteur de temps ou un capteur d'angle de vilebrequin.

7. Moteur à combustion interne selon l'une des revendications précédentes, **caractérisé en ce que**, le moteur (1) comprend au moins un réacteur SCR (12), qui est de préférence disposé dans la ligne d'échappement de second composant (9), de préférence en aval du récepteur de gaz d'échappement (11) .

8. Moteur à combustion interne selon l'une des revendications précédentes, dans lequel la machine à combustion comprend une unité de commande (32) pour le fonctionnement du dispositif de séparation.

9. Moteur à combustion interne selon l'une des revendications précédentes, **caractérisé en ce que**, la ligne d'échappement de premier composant (8) comprend un élément chauffant (16) disposé en amont du dispositif de réduction des matières particulaires (10).

10. Moteur à combustion interne selon l'une des revendications précédentes, **caractérisé en ce que** la ligne d'échappement de second composant comprend un tuyau SCR (13) et un tuyau de dérivation (14), dans lequel un réacteur SCR (12) est disposé dans le tuyau SCR et dans lequel la ligne d'échappement de second composant comprend au moins une, de préférence deux, soupapes (15) pour guider les gaz d'échappement dans le réacteur SCR (12) et/ou le tuyau de dérivation (14).

11. Moteur à combustion interne selon la revendication 10, dans lequel un dispositif d'injection d'un agent réducteur, tel qu'une solution d'urée, est disposé en amont du réacteur SCR (28, 12).

12. Procédé de réduction des émissions de particules et de régénération thermique d'un dispositif de réduction des particules d'un moteur à combustion interne, de préférence un moteur à combustion selon l'une quelconque des revendications 1 à 11, comprenant les étapes de :
- Brûler un carburant dans au moins deux cylindres (2) ayant une chambre de combustion interne (3) avec une entrée pour un carburant et une sortie (5) pour un gaz d'échappement avec une soupape d'échappement (6) ;
- décharger les gaz d'échappement par la sortie (5) ;
- faire fonctionner au moins un dispositif de séparation (7), dans lequel un premier flux de gaz d'échappement déchargé pendant une première phase d'un cycle de combustion est transporté par une ligne d'échappement de premier composant (8), et un second flux de gaz d'échappement subséquent déchargé pendant une seconde phase du cycle de combustion est transporté par une ligne d'échappement de second composant (9), et dans lequel les deux lignes d'échappement (8, 9) sont connectées à le au moins un dispositif de séparation (7) ;
- Guider le premier flux de gaz d'échappement dans la ligne d'échappement de premier composants (8) vers un dispositif de réduction des matières particulaires (10) ;
- Guider le second flux de gaz d'échappement dans la ligne d'échappement de second composant (9), dans lequel les lignes d'échappement de premier et seconde composant sont maintenues séparées au moins jusqu'au dispositif de réduction des matières particulaires (10), dans lequel le premier flux de gaz d'échappement a une première température et le second flux de gaz d'échappement a une seconde température, dans lequel la seconde température est inférieure à la première température ;
- Nettoyage du premier flux de gaz d'échappement dans le dispositif de réduction des matières particulaires de sorte qu'une quantité de matières particulaires soit réduite.

13. Procédé selon la revendication 12, dans lequel, dans l'étape de séparation, une partie évacuée en premier des chambres de combustion interne est guidée dans la ligne d'échappement de premier composant (8) et une partie évacuée par la suite est guidée dans la ligne d'échappement de second composant (9).

14. Procédé selon l'une des revendications 12 à 13 comprenant en outre l'étape de :
- Chauffer le premier flux de gaz d'échappement en amont du dispositif de réduction des matières particulaires (10) pour régénérer thermiquement le dispositif de réduction des matières particulaires (10).

15. Procédé selon l'une des revendications 12 à 14, comprenant en outre l'étape consistant à :
- Guider le second flux de composants de gaz d'échappement à travers la ligne d'échappement de second composant (9), de préférence vers un réacteur SCR (12) ;
- De préférence, faire réagir le second flux de composants de gaz d'échappement dans le réacteur SCR (12).

16. Procédé selon l'une des revendications 12 à 15, dans lequel un agent réducteur est injecté en amont du réacteur SCR (12, 28).

17. Procédé selon l'une des revendications 12 à 16, comprenant l'étape consistant à détecter une valeur permettant de tirer des conclusions sur la température des gaz d'échappement dans les cylindres et de préférence faire fonctionner le dispositif de séparation en fonction de la valeur détectée.
